# EUROPEAN PATENT SPECIFICATION

(11) **EP 1 887 422 B1**
(45) Date of publication and mention of the grant of the patent: **29.04.2009**
(21) Application number: 07013693.2
(22) Date of filing: 12.07.2007
(51) Int. Cl.: G03B 21/58, G09F 1/10, A47G 5/00

(54) **Portable screen and portable screen device**
Tragbarer Bildschirm und tragbare Bildschirmvorrichtung
Ecran portable et dispositif à écran portable

(30) Priority: 31.07.2006 JP 2006209221
(43) Date of publication of application: 13.02.2008
(73) Proprietor: ARISAWA MFG. CO., LTD., Joetsu-shi, Niigata-ken (JP)
(72) Inventor: Tanaka, Koji, Joetsu-shi Niigata-ken (JP)
(74) Representative: HOFFMANN EITLE

(56) References cited:
- GB-A- 2 301 880
- JP-A- 2005 070 313
- US-A- 1 467 624
- US-A- 1 723 944
- US-A- 5 960 848

## Description

### FIELD OF THE INVENTION

The present invention relates to a portable screen and to a portable screen device.

### BACKGROUND OF THE INVENTION

Examples of screens onto which image light from a projector or the like is projected include small-sized portable screens that can be wound into a roll for storage, such as the one disclosed in Patent Reference 1.
[Patent Reference 1] Japanese Laid-open Patent Application No. 2005-70313

GB 2 301 880, US 5 960 848, US 1 467 624 and US 1 723 944 disclose examples of foldable screens made on cardboard.

However, when a screen that can be rolled for storage is used, a fitting must be used for suspending the screen, or a separate stand or the like must be used for fixing the screen when the screen is unrolled against the force with which the screen is rolled into the storage unit. Although sold as portable screens, such screens are still inconvenient to carry and difficult to use, and have not attained consumer acceptance.

### SUMMARY OF THE INVENTION

The present invention was developed in view of such drawbacks as those described above, and an object of the present invention is to provide a portable screen and a portable screen device that have an extremely simple structure, can be manufactured at low cost, and can easily be converted to a service state from an unused state in which the screen can be carried, without the need for an accessory.

The present invention will be summarized with reference to the accompanying drawings.

The present invention according to a first aspect is a portable screen comprising a screen part 1 that is capable of changing shape between an upright service state and a folded state, and a support body 2 for supporting the screen part 1 in the upright service state, wherein the screen part 1 is formed from a left screen body 3 and a right screen body 4 that are connected to each other so as to be able to fold together; the support body 2 is formed from a sheet material having a contacting part 8 that is arranged to make contact with a horizontal mounting surface to which the screen part 1 is mounted; left and right parts 5, 6 of the support body 2 are connected to a back surface of the left screen body 3 of the screen part 1, and to a back surface of the right screen body 4 of the screen part 1, respectively; the support part 2 is configured so as to fold together with the left screen body 3 and the right screen body 4 when the left screen body 3 and the right screen body 4 are closed to place the screen part 1 in the folded state, and to at least partially move away from a back surface of the screen part 1 when the left screen body 3 and the right screen body 4 are opened to place the screen part 1 in the upright service state; the support body 2 is provided with a protruding part 9 that protrudes toward a back surface of the screen part 1 when the screen is in the upright service state; such that the protruding part 9 makes contact with the back surface of the screen part 1 to prevent the left screen body 3 and the right screen body 4 from naturally closing when the screen part 1 is in the upright service state.

The portable screen according to a second aspect is the portable screen according to the first aspect, wherein the protruding part 9 is formed by flexing in relation to the support body 2, and the protruding part 9 is composed of a left part 9a and a right part 9b; and a locking mechanism for locking the left part 9a and the right part 9b is provided to the protruding part 9.

The portable screen according to a third aspect is the portable screen according to the second aspect, wherein the portable screen is configured so that a locked state of the locking mechanism is released in conjunction with folding of the screen part 1 when the screen part 1 is placed in a folded state.

The portable screen according to a fourth aspect is the portable screen according any of the first' through third aspects, wherein the portable screen is configured so that a boundary of the left screen body 3 and the right screen body 4 is held securely by flexing of the protruding part 9.

The portable screen according to a fifth aspect is the portable screen according to any of the first through fourth aspects, wherein that the support body 2 is formed from a sheet material that has a prescribed rigidity.

The portable screen according to a sixth aspect is the portable screen according to any of the first through fifth aspects, wherein a tilt prevention body 12 is provided to a surface of the screen part 1 in order to prevent tilting towards the surface.

The portable screen according to a seventh aspect is the portable screen according to the sixth aspect, wherein the tilt prevention body 12 is composed of a sheet material having a contacting part 16 that makes contact with a mounting surface to which the screen part 1 is mounted, left and right parts 13, 14 of the tilt prevention body 12 are connected to a surface of the left screen body 3 of the screen part, and to a surface of the right screen body 4 of the screen part, respectively; and the tilt prevention body 12 is configured so as to at least partially protrude from a surface of the screen part 1 when the left screen body 3 and the right screen body 4 are opened to place the screen part 1 in the upright service state, and to fold together with the left screen body 3 and the right screen body 4 when the left screen body 3 and the right screen body 4 are closed to place the screen part 1 in the folded state.

The portable screen according to an eighth aspect is the portable screen according to the seventh aspect, wherein the tilt prevention body 12 is attached to surfaces of the left screen body 3 and the right screen body 4, and folds together with the left screen body 3 and the right screen body 4 when the left screen body 3 and the right screen body 4 are closed into a folded state.

The portable screen according to a ninth aspect is the portable screen according to any of the first through eighth aspects, wherein a diagonal length of an effective screen area of the screen part 1 is 30 inches or less.

The portable screen device according to a tenth aspect comprising the portable screen according to any of the first through ninth aspects, and a projector for projecting image light to the screen part 1.

The present invention configured as described above provides a portable screen and a portable screen device that have an extremely simple structure, can be manufactured at low cost, and can easily be converted to a service state from an unused state in which the screen can be carried, without the need for an accessory.

### BRIEF DESCRIPTION OF THE DRAWINGS

FIG. 1 is a schematic perspective view showing the surface side in the upright service state of the present example;
FIG. 2 is a schematic perspective view showing the back surface before the folding part is folded in the present example;
FIG. 3 is a schematic perspective view showing the back surface after the folding part is folded in the present example;
FIG. 4 is a schematic perspective view showing the back surface in the folded state of the present example;
FIG. 5 is a partially cut-away schematic perspective view showing the transition from the upright service state to the folded state in the present example;
FIG. 6 is an enlarged schematic perspective view showing the folded state in the present example;
FIG. 7 is a schematic view showing the support body of the present example;
FIG. 8 is a schematic perspective view showing the back surface prior to folding the folding part in another example; and
FIG. 9 is a schematic perspective view showing the back surface after the folding part is folded in the other example.

### DETAILED DESCRIPTION OF THE INVENTION

Preferred embodiments of the present invention will be briefly described by describing the operation of the present invention based on the accompanying drawings.

When the screen part 1 composed of the left screen body 3 and the right screen body 4 is opened from the twofold folded state so as to stand in the upright service state, the support body 2 connected to the screen part 1 is moved a prescribed distance away from the back surface of the screen part 1, and the contacting part 8 of the support body 2 is then brought into contact with a mounting surface. The screen part 1 is therefore stably supported.

At this time, when the protruding part 9 provided to the support body 2 is provided in protruding fashion to the back surface of the screen part 1, the protruding part 9 bridges the gap (has a so-called propping effect) between the support body 2 and the back surface of the screen part 1, the left screen body 3 and the right screen body 4 are prevented from naturally closing, the separated state of the screen part 1 and the contacting part 8 is maintained, and the upright service state of the screen part 1 is satisfactorily maintained.

When the screen part 1 is folded in two from the upright service state to the folded state, the support body 2 is folded together with the screen part 1 (the support body 2 folds together on the back surfaces of the folded left screen body 3 and right screen body 4), and the screen is made easier to carry.

Consequently, the present invention provides excellent portability in which there is no need for preparing or attaching a separate accessory, and the screen can easily be converted between an upright service state and a folded state merely by providing a support body composed of a sheet material to the back surface of the screen part.

### [Examples]

Specific examples of the present invention will be described based on the drawings.

The present example is a portable screen composed of a screen part 1 that is capable of changing shape between an upright service state and a folded state, and a support body 2 for supporting the screen part 1 in the upright service state, wherein the screen part 1 is formed from a left screen body 3 and a right screen body 4 that are connected to each other so as to be able to fold together; the support body 2 is formed from a sheet material having a contacting part 8 that makes contact with a mounting surface to which the screen part 1 is mounted; left and right parts 5, 6 of the support body 2 are connected to a back surface of the left screen body 3 of the screen part 1, and to a back surface of the right screen body 4 of the screen part 1, respectively; the support part 2 is configured so as to fold together with the left screen body 3 and the right screen body 4 when the left screen body 3 and the right screen body 4 are closed to place the screen part 1 in the folded state, and to at least partially move away from a back surface of the screen part 1 when the left screen body 3 and the right screen body 4 are opened to place the screen part 1 in the upright service state; a protruding part 9 that protrudes toward a back surface of the screen part 1 is provided to the support body 2; and the protruding part 9 makes contact with a back surface of the screen part 1 to prevent the left screen body 3 and the right screen body 4 from naturally closing when the screen part 1 is in the upright service state.

Specifically, the present example is a small-sized portable screen in which the diagonal length of the effective screen area of the screen part 1 is 30 inches or less, and the portable screen is used as a portable screen device together with a projector for projecting image light onto the screen part 1.

Each component will be specifically described.

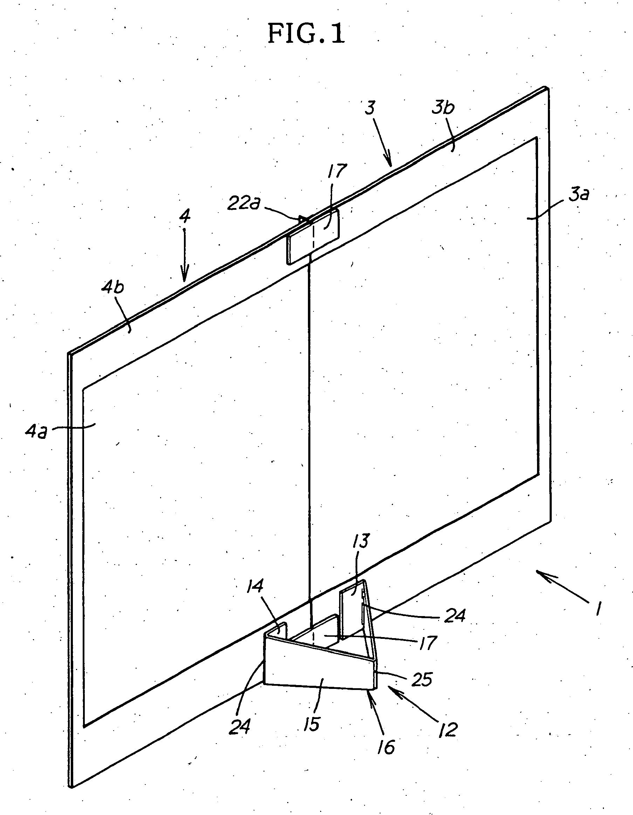

The screen part 1 is composed of a left screen body 3 and a right screen body 4. Specifically, as shown in FIG. 1, the left screen body 3 is composed of a left screen panel 3a, and a left frame body 3b that is provided to the external periphery of the surface of the left screen panel 3a. The left frame body 3b is formed substantially in a horseshoe shape that is open toward a right screen panel 4a as viewed from the front. The right screen body 4 is composed of a right screen panel 4a, and a right frame body 4b that is provided to the external periphery of the surface of the right screen panel 4a. The right frame body 4b is formed substantially in a horseshoe shape that is open toward the left screen panel 3a as viewed from the front.

The left and right directions in the present example are based on a state in which the screen part 1 is viewed from the back surface (the opposite side from the surface on which the image is displayed).

The left screen panel 3a and the right screen panel 4a are each formed by laminating a front material, a middle material, and a back material using an adhesive. Publicly known materials may be used as the front material, the middle material, the back material, and the adhesive. In the present example, the screen described in Japanese Patent No. 3103802 is used as the front material, polyethylene terephthalate film is used as the middle material, an aluminum panel is used as the back material, and a urethane-based adhesive is used as the adhesive. A synthetic resin composed of polypropylene or the like is used to form the left frame body 3b and the right frame body 4b.

The left screen body 3 and the right screen body 4 are connected to each other via a panel hinge member 17 made of a synthetic resin that allows opening and closing between a closed state and a state of opening at an angle of approximately 180°. The panel hinge member 17 is connected to upper and lower end parts, i.e., the left frame body 3b and the right frame body 4b, that are not part of the image display on the surface of the screen part 1.

Accordingly, when the screen part 1 is folded together so that the surface of the left screen body 3 and the surface of the right screen body 4 are brought together, the screen surfaces are prevented from touching each other by the left frame body 3b and the right frame body 4b, and the screen surfaces are not easily damaged. As an alternative to the frame bodies that use the panel hinge member 17 described above, the left frame body 3b and the right frame body 4b may be integrated with each other, and a frame body that has a crease in the center of the frame body may be used. The number of components can thereby be reduced, and the structure of the screen can be simplified.

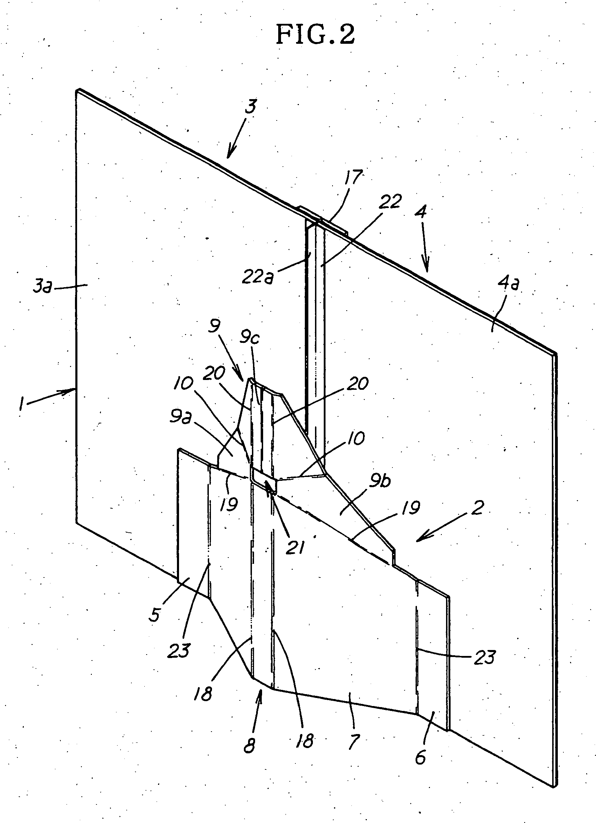

As shown in FIG. 2, a support body 2 composed of a sheet material made of polypropylene or another synthetic resin having an appropriate rigidity is provided to the back surface of the screen part 1.

Specifically, the left end part 5 of the support body 2 is fixed to the back surface of the left screen panel 3a of the screen part 1, and the right end part 6 is fixed to the back surface of the right screen panel 4a. A base part 7 is provided between the left end part 5 and the right end part 6. Creases 23 extending perpendicular (in the vertical direction) to the mounting surface are provided between the base part 7 and the left and right end parts 5, 6 to facilitate opening and closing.

Creases 18 that are capable of folding together with the screen part 1 when the screen part 1 is placed in the folded state are formed in the base part 7 of the support body 2.

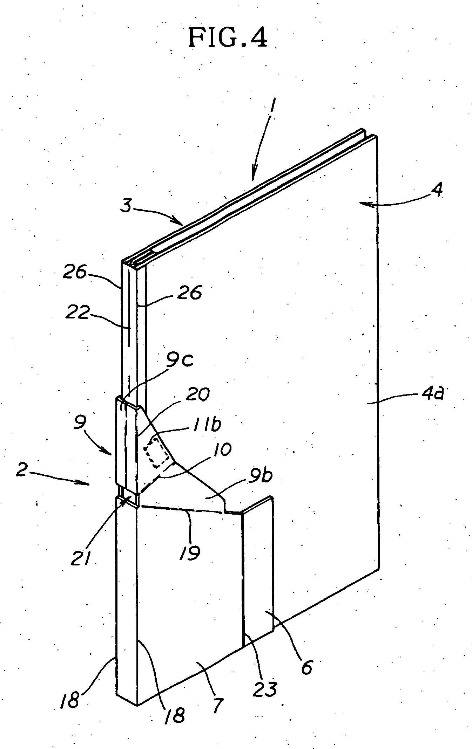

Specifically, as shown in FIG. 4, two creases 18 are provided to the base part 7 a prescribed distance apart and extending in the vertical direction so as to substantially coincide with opposing edges 26 of the connection side (proximal end of opening and closing) connected by the panel hinge member 17 on the back side of the left screen panel 3a and the right screen panel 4a of the screen part 1.

A contacting part 8 that makes contact with the mounting surface on which the screen part 1 is mounted is provided to the base part 7 of the support body 2.

Specifically, the base part 7 is configured so that the edge of the lower end thereof is in substantially the same plane as the mounting surface, and the edge of the lower end is set as the contacting part 8. In other words, a configuration is adopted in which the distance of separation from the back surface of the screen part 1 decreases toward the end portions (sides near the left end part 5 and the right end part 6 of the support body 2) of the contacting part 8, and the distance of separation from the back surface of the screen part 1 increases toward the center.

Accordingly, the screen part 1 can be stably placed upright through contact with the mounting surface so that the linear lower edge of the screen part 1 as viewed in a plane and the substantially V-shaped lower edge of the base part 7 of the support body 2 as viewed in a plane form a substantially triangular shape as viewed in a plane.

A folded-in part 9 (protruding part 9) is connected to the upper end of the base part 7 of the support body 2. Specifically, the folded-in part 9 and the base part 7 are connected to each other via a center opening 21 and left and right creases 19 that tilt upward toward the opening 21. The folded-in part 9 can therefore fold in towards the back surface of the screen part 1 from the creases 19.

Furthermore, the folded-in part 9 is composed of a left part 9a, a right part 9b, and a middle part 9c, and creases are provided between the middle part 9c and the left part 9a and right part 9b.

Specifically, the creases include creases 10 leading towards the opening 21 from near the center of the upper edges of the left part 9a and the right part 9b that tilt downward from the center to the left and right end parts, and creases 20 that extend in the vertical direction and are provided at the boundaries between the middle part 9c and the left part 9a and right part 9b.

In the same manner as the creases 18, the creases 20 extend in the vertical direction on the back surface of the left screen panel 3a and the right screen panel 4a of the screen part 1 so as to substantially coincide with the opposing edges 26 of the connection side (proximal end of opening and closing) connected by the hinge member 17. Accordingly, when the screen part 1 is in the folded state, the support body 2 is folded together with the screen part 1 so as to come together with the back surface of the screen part 1, as shown in FIG. 4.

A locking mechanism for locking the left part 9a and the right part 9b together is provided to the folded-in part 9.

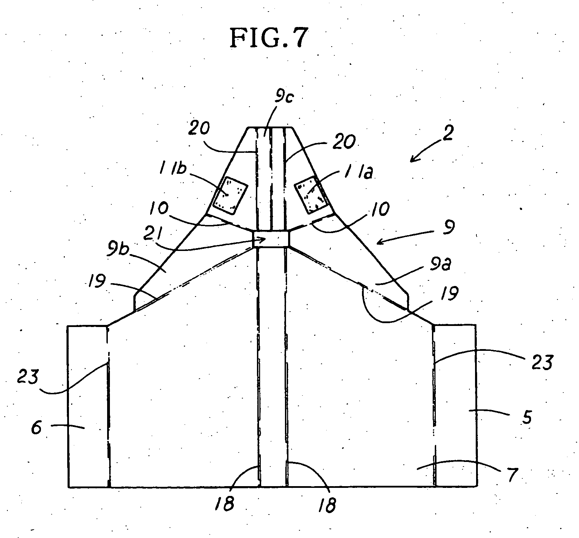

Specifically, as shown in FIG. 7, a locking part 11a that detachably locks a locked part 11b provided to the internal surface of the other side is provided to the internal surface of the left part 9a or the right part 9b of the folded-in part 9. In the present example, the locking part 11a is provided to the left part 9a, and the locked part 11b is provided to the right part 9b. A hook-and-loop fastener structure or other structure that allows easy attachment and detachment is preferably used as the locking mechanism.

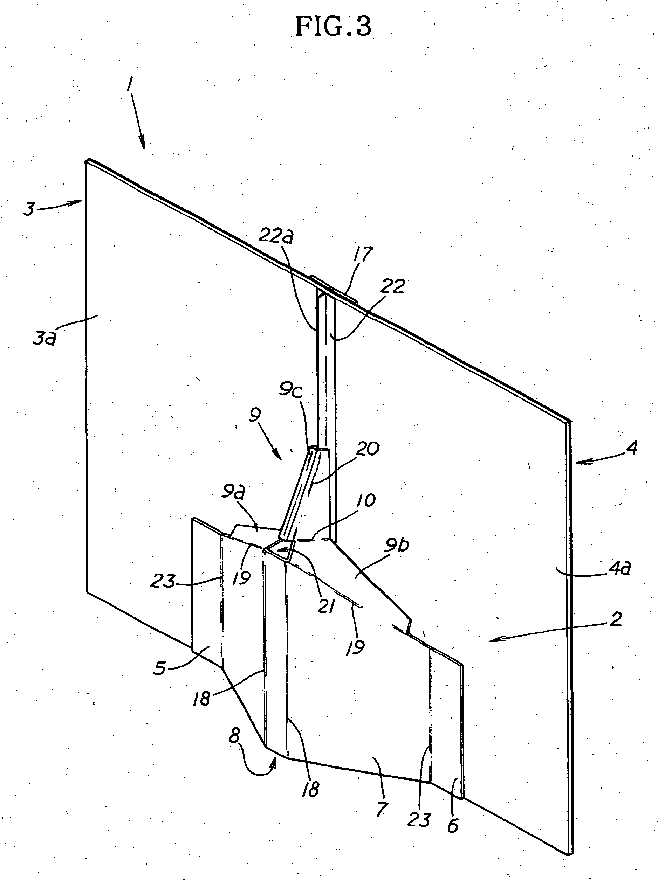

Accordingly, in the present example, the screen part 1 is placed in the upright service state as shown in FIG. 3, the folded-in part 9 is folded in from the creases 19 towards the back surface of the screen part 1 so as to pinch the vicinity of the creases 10, and the left part 9a and the right part 9b are folded together at the creases 20 and 10 so as to partially overlap, whereby the left part 9a and the right part 9b are locked together by the locking mechanism, and the folded-in part 9 can be fixed in such a folded-in state as the one shown in FIG. 3.

An extremely simple operation thus prevents the left screen body 3 and the right screen body 4 from naturally closing, the state of separation of the contacting part 8 from the back surface of the screen part 1 can be satisfactorily maintained, and the upright state of the screen part 1 can be stably maintained.

The present example is configured so that the locking together of the left part 9a and the right part 9b by the locking mechanism of the folded-in part 9 is released in conjunction with the folding together of the screen part 1 when the screen part 1 in the upright service state is folded together into the folded state.

Specifically, since the creases 20 of the folded-in part 9 extend in the vertical direction on the back surface of the left screen panel 3a and the right screen panel 4a of the screen part 1 so as to substantially coincide with the opposing edges 26 of the connection side (proximal end of opening and closing) connected by the hinge member 17, the opposing edges 26 spread out the left part 9a and the right part 9b of the folded-in part 9 that are folded together when the screen part 1 is folded in two.

Accordingly, the locking by the locking mechanism can be released by spreading out the left part 9a and the right part 9b with a force that exceeds the locking force created by the locking mechanism, there is no need to separately release the locking mechanism before folding up the screen, and the screen can be folded up by an extremely simple operation. As mentioned above, it is thus preferred that a hook-and-loop fastener structure or other structure that allows easy attachment and detachment be used as the locking mechanism.

In the present example, tape 22 is affixed to the back surface between the left screen body 3 and the right screen body 4 so that a standing part 22a emerges when the screen part 1 is in the upright state. Accordingly, the screen part 1 can be maintained in a 180-degree open state by folding the left part 9a and the right part 9b of the folded-in part 9 over each other so as to hold the standing part 22a. When the screen is closed, the standing part 22a acts as a guide for ensuring the normal release of the locked part 11b and the locking part 11a of the locking mechanism by the abovementioned opposing edges 26. The upright state of the screen part 1 can thus be simply and satisfactorily maintained, and the transition to the folded state can also be performed smoothly.

A tilt prevention body 12 for preventing a tilt towards the surface is provided to the lower end of the surface of the screen part 1. The tilt prevention body 12 is composed of a sheet material having a contacting part 16 that makes contact with a mounting surface to which the screen part 1 is mounted, left and right parts 13, 14 of the tilt prevention body 12 are connected to a surface of the left screen body 3 of the screen part 1, and to a surface of the right screen body 4 of the screen part 1, respectively; and the tilt prevention body 12 is configured so as to at least partially protrude from a surface of the screen part 1 when the left screen body 3 and the right screen body 4 are opened to place the screen part 1 in the upright service state, and to fold together with the left screen body 3 and the right screen body 4 when the left screen body 3 and the right screen body 4 are closed to place the screen part 1 in the folded state.

The left and right end parts 13, 14 provided to the left frame body 3b and the right frame body 4b, respectively, of the tilt prevention body 12 are connected to a base part 15 via creases 24 that extend in the vertical direction with respect to the mounting surface. A crease 25 that extends in the vertical direction is also provided in the center of the base part 15.

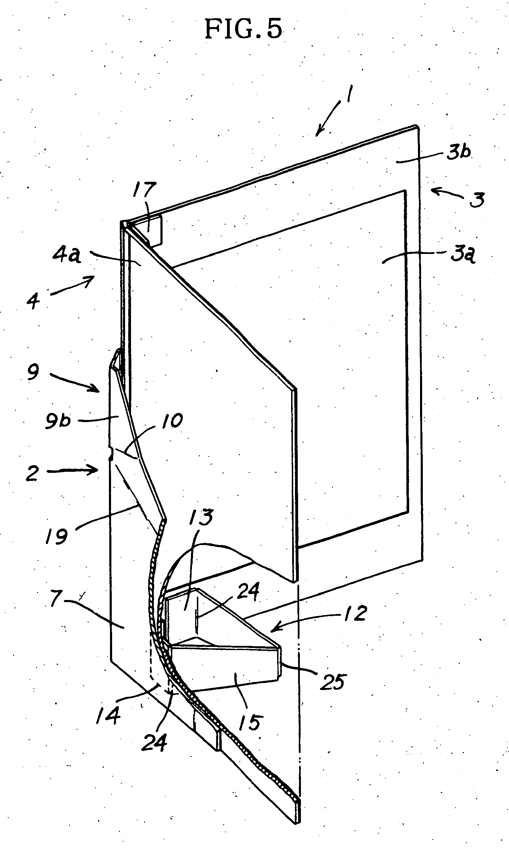

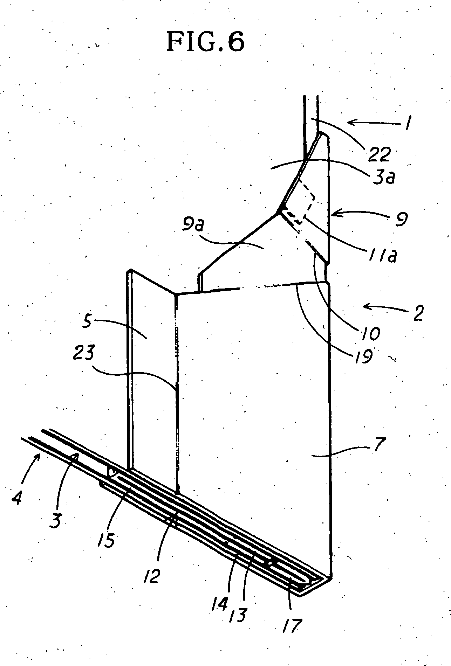

Specifically, when the screen part 1 is in the upright service state, the tilt prevention body 12 is flexed in substantially V-shaped fashion when viewed in a plane at the creases 24, 25 as shown in FIG. 1. When the screen part 1 is in the folded state, the creases 24 are extended, and the left and right parts of the base part 15 are folded together with each other inside the screen part 1 via the crease 25 along with the screen part 1, as shown in FIGS. 5 and 6. The tilt prevention body 12 in the present example is formed from the same sheet material as the support body 2. The tilt prevention body 12 may also be formed from a different sheet material than the support body 2.

Accordingly, when the screen is converted from the folded state to the upright service state in the present example, the support body 2 and the contacting portion 16 of the tilt prevention body 12 separate from the screen part 1 so that the upright state of the screen part 1 can be more stably maintained.

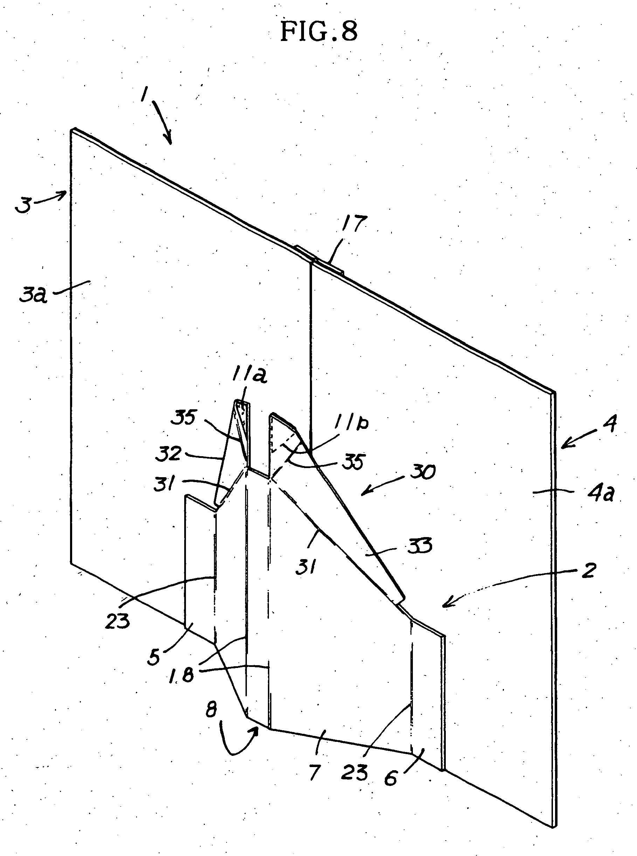

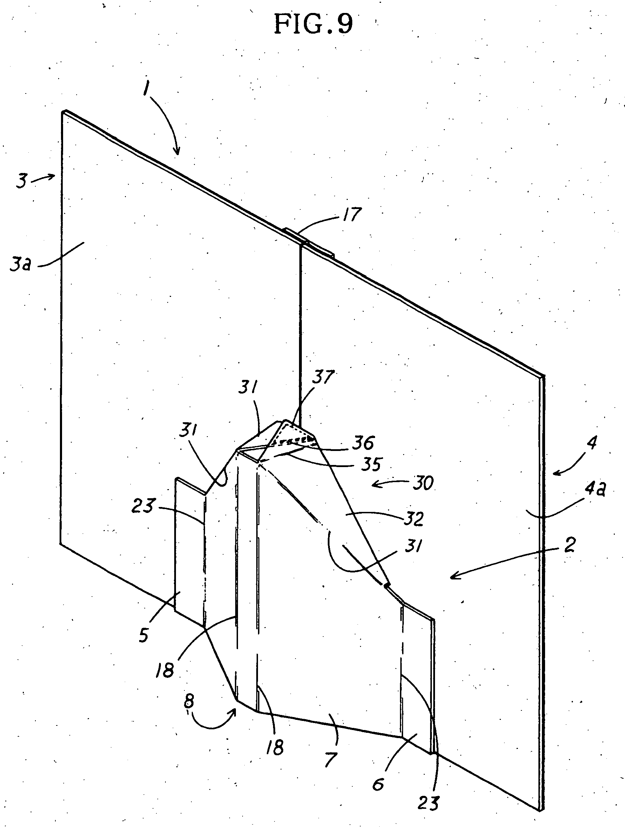

In the present example, a structure such as the one described above is adopted for the folded-in part 9, but another structure may also be employed. For example, a folded-in part 30 such as the one shown in FIGS. 8 and 9 may be used.

Specifically, in the folded-in part 30, a left part 32 and a right part 33 are cut apart and connected to the upper edge parts of the base part 7 via creases 31 that slope downward from the center to the left and right ends, and by folding in towards the back surface of the screen part 1 from the creases 31, the left part 32 and the right part 33 protrude towards the back surface of the screen part 1, and the upper edges of the left part 32 and the right part 33 approach each other.

Creases 34 are also provided in positions near the upper ends of the left part 32 and the right part 33, and the upper ends are folded together at the creases 34, whereby the upper ends of the left part 32 and the right part 33 can be placed over each other.

The locking part 11a is provided on the external surface of the upper end part of the left part 32, and the locked part 11b is provided on the internal surface of the upper end part of the right part 33.

Consequently, in the same manner as in the present example, the left part 32 and the right part 33 that are folded over each other are locked together, and the state of separation between the contacting part 8 and the back surface of the screen part 1 can be maintained by the folded-in part 30.

According to the configuration described above, when the screen part 1 composed of the left screen body 3 and the right screen body 4 is opened from the twofold folded state so as to stand in the upright service state in the present example, the support body 2 connected to the screen part 1 is moved a prescribed distance away from the back surface of the screen part 1, and the contacting part 8 of the support body 2 is then brought into contact with a mounting surface. The screen part 1 is therefore stably supported.

At this time, when the protruding part 9 provided to the support body 2 is provided in protruding fashion to the back surface of the screen part 1, the protruding part 9 bridges the gap (has a so-called propping effect) between the support body 2 and the back surface of the screen part 1, the left screen body 3 and the right screen body 4 are prevented from naturally closing, the separated state of the screen part 1 and the contacting part 8 is maintained, and the upright service state of the screen part 1 is satisfactorily maintained.

When the screen part 1 is folded in two from the upright service state to the folded state, the support body 2 is folded together with the screen part 1 (the support body 2 folds together on the back surfaces of the folded left screen body 3 and right screen body 4), and the screen is made easier to carry.

Consequently, the present invention provides excellent portability in which there is no need for preparing or attaching a separate accessory, and the screen can easily be converted between an upright service state and a folded state merely by providing a support body composed of a sheet material to the back surface of the screen part.

## Claims

1. A portable screen comprising:
a screen part (1) that is capable of changing shape between an upright service state and a folded state; and
a support body for supporting the screen part in the upright service state; wherein
the screen part is formed from a left screen body (3) and a right screen body (4) that are connected to each other so as to be able to fold together;
the support body (2) is formed from a sheet material having a contacting part (8) arranged to make contact with a horizontal mounting surface on which the screen part is to be mounted;
left (5) and right (6) parts of the support body are connected to a back surface of the left screen body of the screen part, and to a back surface of the right screen body of the screen part, respectively;
the support body (8) configured so as to fold together with the left screen body (3) and the right screen body (4) when the left screen body and the right screen body are closed to place the screen part in the folded state, and to at least partially move away from a back surface of the screen part when the left screen body and the right screen body are opened to place the screen part in the upright service state; and
the support body is provided with a protruding part (9) arranged to protrude toward the back surface of the screen part when the screen is in the upright service state; such that
the protruding part makes contact with a back surface of the screen part to prevent the left screen body and the right screen body from naturally closing when the screen part is in the upright service state.

2. The portable screen according to claim 1, wherein the protruding part is formed by flexing in relation to the support body, and the protruding part is composed of a left part and a right part; and
a locking mechanism for locking the left part and the right part is provided to the protruding part.

3. The portable screen according to claim 2, wherein the portable screen is configured so that a locked state of the locking mechanism is released in conjunction with folding of the screen part when the screen part is placed in a folded state.

4. The portable screen according to any of claims 1 through 3, wherein the portable screen is configured so that a boundary of the left screen body and the right screen body is held securely by flexing of the protruding part.

5. The portable screen according to any of claims 1 through 4, wherein the support body is formed from a sheet material that has a prescribed rigidity.

6. The portable screen according to any of claims 1 through 5, wherein a tilt prevention body (12) is provided to a surface of the screen part in order to prevent tilting towards the surface.

7. The portable screen according to claim 6, wherein
the tilt prevention body is composed of a sheet material having a contacting part that makes contact with a mounting surface to which the screen part is mounted;
left and right parts of the tilt prevention body are connected to a surface of the left screen body of the screen part, and to a surface of the right screen body of the screen part, respectively; and
the tilt prevention body is configured so as to at least partially protrude from a surface of the screen part when the left screen body and the right screen body are opened to place the screen part in the upright service state, and to fold together with the left screen body and the right screen body when the left screen body and the right screen body are closed to place the screen part in the folded state.

8. The portable screen according to claim 7, wherein the tilt prevention body is attached to surfaces of the left screen body and the right screen body, and fold together with the left screen body and the right screen body when the left screen body and the right screen body are closed into a folded state.

9. The portable screen according to any of claims 1 through 8, wherein a diagonal length of an effective screen area of the screen part is 30 inches or less.

10. A portable screen device comprising:
the portable screen according to any of claims 1 through 9; and
a projector for projecting image light to the screen part.

## Patentansprüche

1. Tragbarer Schirm, umfassend
einen Schirmteil (1), der zum Wechseln einer Form zwischen einem aufrechten Betriebszustand und einem gefalteten Zustand geeignet ist, und
einen Haltekörper zum Halten des Schirmteils in dem aufrechten Betriebszustand, wobei
der Schirmteil aus einem linken Schirmkörper (3) und einem rechten Schirmkörper (4) gebildet ist, die miteinander verbunden sind, um sich zusammenfalten zu können,
der Haltekörper (2) aus einem Bogenmaterial mit einem Kontaktteil (8) gebildet ist, der angeordnet ist, um Kontakt mit einer horizontalen Befestigungsoberfläche herzustellen, an welcher der Schirmteil zu befestigen ist,
linke (5) und rechte (6) Teile des Haltekörpers jeweils mit einer Rückoberfläche des linken Schirmkörpers des Schirmteils und mit einer Rückoberfläche des rechten Schirmkörpers des Schirmteils verbunden sind,
der Haltekörper (8) eingerichtet ist, um sich mit dem linken Schirmkörper (3) und dem rechten Schirmkörper (4) zusammenzufalten, wenn der linke Schirmkörper und der reche Schirmkörper geschlossen sind, um den Schirmteil in dem gefalteten Zustand anzuordnen und um sich zumindest teilweise von einer Rückoberfläche des Schirmteils weg zu bewegen, wenn der linke Schirmkörper und der rechte Schirmkörper geöffnet sind, um den Schirmteil in dem aufrechten Betriebszustand anzuordnen, und
der Haltekörper mit einem vorstehenden Teil (9) versehen ist, der angeordnet ist, um in Richtung der Rückoberfläche des Schirmteils derart vorzustehen, wenn der Schirm in dem aufrechten Betriebszustand ist, dass
der vorstehende Teil Kontakt mit einer Rückoberfläche des Schirmteils herstellt, um den linken Schirmkörper und den rechten Schirmkörper daran zu hindern, sich natürlich zu schließen, wenn der Schirmteil in dem aufrechten Betriebszustand ist.

2. Tragbarer Schirm nach Anspruch 1, wobei der vorstehende Teil durch Biegen in Bezug auf den Haltekörper gebildet wird und der vorstehende Teil aus einem linken Teil und einem rechten Teil zusammengestellt ist und
ein Feststellmechanismus zum Feststellen des linken Teils und des rechten Teils an dem vorstehenden Teil vorhanden ist.

3. Tragbarer Schirm nach Anspruch 2, wobei der tragbare Schirm so eingerichtet ist, dass ein festgestellter Zustand des Feststellmechanismus in Verbindung mit einem Falten des Schirmteils gelöst wird, wenn der Schirmteil in einem gefalteten Zustand angeordnet ist.

4. Tragbarer Schirm nach einem der Ansprüche 1 bis 3, wobei der tragbare Schirm eingerichtet ist, so dass eine Grenze des linken Schirmkörpers und des rechten Schirmkörpers sicher durch Biegen des vorstehenden Teils gehalten wird.

5. Tragbarer Schirm nach einem der Ansprüche 1 bis 4, wobei der Haltekörper aus einem Bogenmaterial gebildet ist, das eine vorgeschriebene Festigkeit aufweist.

6. Tragbarer Schirm nach einem der Ansprüche 1 bis 5, wobei ein Neigungsverhinderungskörper (12) an einer Oberfläche des Schirmteils vorgesehen ist, um ein Neigen in Richtung der Oberfläche zu verhindern.

7. Tragbarer Schirm nach Anspruch 6, wobei
der Neigungsverhinderungskörper aus einem Bogenmaterial mit einem Kontaktierungsteil zusammengestellt ist, der Kontakt mit einer Befestigungsoberfläche herstellt, an welcher der Schirmteil befestigt ist,
linke und rechte Teile des Neigungsverhinderungskörpers jeweils mit einer Oberfläche des linken Schirmkörpers des Schirmteils und mit einer Oberfläche des rechten Schirmkörpers des Schirmteils verbunden sind, und
der Neigungsverhinderungskörper eingerichtet ist, um zumindest teilweise von einer Oberfläche des Schirmteils vorzustehen, wenn der linke Schirmkörper und der rechte Schirmkörper geöffnet sind, um den Schirmteil in dem aufrechten Betriebszustand anzuordnen, und um sich mit dem linken Schirmkörper und dem rechten Schirmkörper zusammenzufalten, wenn der linke Schirmkörper und der rechte Schirmkörper geschlossen werden, um den Schirmteil in dem gefalteten Zustand anzuordnen.

8. Tragbarer Schirm nach Anspruch 7, wobei der Neigungsverhinderungskörper an Oberflächen des linken Schirmkörpers und des rechten Schirmkörpers angebracht ist und sich mit dem linken Schirmkörper und dem rechten Schirmkörper zusammenfaltet, wenn der linke Schirmkörper und der rechte Schirmkörper in einen gefalteten Zustand geschlossen werden.

9. Tragbarer Schirm nach einem der Ansprüche 1 bis 8, wobei eine diagonale Länge einer effektiven Schirmfläche des Schirmteils 30 Zoll oder weniger ist.

10. Tragbare Schirmvorrichtung, umfassend
den tragbaren Schirm nach einem der Ansprüche 1 bis 9 und
einen Projektor zum Projizieren von Bildlicht auf den Schirmteil.

## Revendications

1. Écran portatif comprenant :
une partie d'écran (1) qui est susceptible de changer de forme entre un état de service vertical et un état plié ; et
un corps de support pour supporter la partie d'écran dans l'état de service vertical ; dans lequel
la partie d'écran est formée d'un corps d'écran gauche (3) et d'un corps d'écran droit (4) qui sont reliés l'un à l'autre afin d'être susceptible de se plier ensemble ;
le corps de support (2) est formé d'une matière en feuille ayant une partie de mise en contact (8) agencée pour établir le contact avec une surface de montage horizontale sur laquelle la partie d'écran doit être montée ;
les parties gauche (5) et droite (6) du corps de support sont respectivement reliées à une surface arrière du corps d'écran gauche de la partie d'écran et à une surface arrière du corps d'écran droit de la partie d'écran ;
le corps de support (8) est configuré de façon à se plier avec le corps d'écran gauche (3) et le corps d'écran droit (4) lorsque le corps d'écran gauche et le corps d'écran droit sont fermés pour placer la partie d'écran dans l'état plié, et pour au moins s'écarter partiellement d'une surface arrière de la partie d'écran lorsque le corps d'écran gauche et le corps d'écran droit sont ouverts pour placer la partie d'écran dans l'état de service vertical ; et
le corps de support est muni d'une partie en saillie (9) agencée pour avancer vers la surface arrière de la partie d'écran lorsque l'écran est dans l'état de service vertical ; de sorte que
la partie en saillie établit le contact avec une surface arrière de la partie d'écran pour empêcher le corps d'écran gauche et le corps d'écran droit de se fermer naturellement lorsque la partie d'écran est dans l'état de service vertical.

2. Écran portatif selon la revendication 1, dans lequel la partie en saillie est formée par un fléchissement par rapport au corps de support, et la partie en saillie est composée d'une partie gauche et d'une partie droite ; et
un mécanisme de verrouillage pour verrouiller la partie gauche et la partie droite est prévu sur la partie en saillie.

3. Écran portatif selon la revendication 2, dans lequel l'écran portatif est configuré de sorte qu'un état verrouillé du mécanisme de verrouillage est libéré en relation avec le pliage de la partie d'écran lorsque la partie d'écran est placée dans un état plié.

4. Écran portatif selon l'une quelconque des revendications 1 à 3, dans lequel l'écran portatif est configuré de sorte qu'une frontière du corps d'écran gauche et du corps d'écran droit est maintenue solidement par le fléchissement de la partie en saillie.

5. Écran portatif selon l'une quelconque des revendications 1 à 4, dans lequel le corps de support est formé d'une matière en feuille qui a une rigidité prédéterminée.

6. Écran portatif selon l'une quelconque des revendications 1 à 5, dans lequel un corps de prévention de basculement (12) est prévu sur une surface de la partie d'écran afin d'empêcher le basculement vers la surface.

7. Écran portatif selon la revendication 6, dans lequel :
le corps de prévention de basculement est composé d'une matière en feuille ayant une partie de mise en contact qui établit le contact avec une surface de montage sur laquelle la partie d'écran est montée ;
les parties gauche et droite du corps de prévention de basculement sont respectivement reliées à une surface du corps d'écran gauche de la partie d'écran et à une surface du corps d'écran droit de la partie d'écran ; et
le corps de prévention de basculement est configuré de façon à au moins avancer partiellement depuis une surface de la partie d'écran lorsque le corps d'écran gauche et le corps d'écran droit sont ouverts pour placer la partie d'écran dans l'état de service vertical, et de façon à se plier ensemble avec le corps d'écran gauche et le corps d'écran droit lorsque le corps d'écran gauche et le corps d'écran droit sont fermés pour placer la partie d'écran dans l'état plié.

8. Écran portatif selon la revendication 7, dans lequel le corps de prévention de basculement est attaché aux surfaces du corps d'écran gauche et du corps d'écran droit et se plie avec le corps d'écran gauche et le corps d'écran droit lorsque le corps d'écran gauche et le corps d'écran droit sont fermés dans un état plié.

9. Écran portatif selon l'une quelconque des revendications 1 à 8, dans lequel une longueur diagonale d'une zone d'écran efficace de la partie d'écran fait 30 pouces ou moins.

10. Dispositif à écran portatif comprenant :
l'écran portatif selon l'une quelconque des revendications 1 à 9 ; et
un projecteur pour projeter une lumière d'image sur la partie d'écran.
